(19) Europäisches Patentamt
European Patent Office
Office européen des brevets

(11) Veröffentlichungsnummer: **0 096 768**
**A2**

(12) # EUROPÄISCHE PATENTANMELDUNG

(21) Anmeldenummer: **83105099.2**

(22) Anmeldetag: **24.05.83**

(51) Int. Cl.³: **C 08 G 59/16,** C 09 D 3/58, C 09 D 5/40, C 25 D 13/06

(30) Priorität: **11.06.82 AT 2261/82**
**11.06.82 AT 2262/82**

(43) Veröffentlichungstag der Anmeldung: **28.12.83**
**Patentblatt 83/52**

(84) Benannte Vertragsstaaten: **DE FR GB IT**

(71) Anmelder: **VIANOVA KUNSTHARZ AKTIENGESELLSCHAFT, Postfach 191 Leechgasse 21, A-8011 Graz (AT)**

(72) Erfinder: **Paar, Willibald, Dr., Haberlandtweg 23, A-8045 Graz (AT)**
Erfinder: **Hönig, Helmut, Dr., Seebachergasse 10, A-8010 Graz (AT)**

(74) Vertreter: **Pitter, Robert, Dr. et al, Leechgasse 21, A-8010 Graz (AT)**

(54) **Verfahren zur Herstellung von wasserverdünnbaren Oxazolidingruppen tragenden Epoxidharzestern, daraus hergestellte Überzugsmittel und deren Verwendung als kathodisch abscheidbare Lacke.**

(57) Die vorliegende Erfindung betrifft ein Verfahren zur Herstellung von nach vollständiger oder partieller Neutralisation mit anorganischen und/oder organischen Säuren wasserverdünnbaren Bindemitteln für kathodisch abscheidbare Lacke durch Umsetzung von mindestens 50 Mol-% der Epoxidgruppen einer harzartigen Verbindung mit mindestens zwei 1,2-Epoxidgruppen pro Molekül und einem Epoxidäquivalent von mindestens 160, mit Halbestern aus aliphatischen, cycloaliphatischen oder aromatischen Dicarbonsäuren und substituierten Hydroxyalkyloxazolidinen.

Durch den Einsatz dieser substituierten Oxazolidinhalbester erhält man Produkte mit wesentlich verbesserten Eigenschaften, insbesondere bezüglich der Ausbildung einer einwandfreien Filmoberfläche der eingebrannten Filme.

EP 0 096 768 A2

Verfahren zur Herstellung von wasserverdünnbaren Oxazolidingruppen tragenden Epoxidharzestern, daraus hergestellte Überzugsmittel und deren Verwendung als kathodisch abscheidbare Lacke.

In der EP 00 28 402 wird ein Verfahren zur Herstellung von nach vollständiger oder partieller Neutralisation mit anorganischen und/oder organischen Säuren wasserverdünnbaren Bindemitteln, insbesondere für die Verwendung in kathodisch abscheidbaren Überzugsmitteln, auf der Basis von Epoxidharzestern beschrieben, welches dadurch gekennzeichnet ist, daß man die Epoxidgruppen einer harzartigen Verbindung mit mindestens 2 Epoxidgruppen pro Molekül mit einem Halbester einer aliphatischen, cycloaliphatischen oder aromatischen Dicarbonsäure und einem N-2-Hydroxyalkyloxazolidin und gegebenenfalls einer gesättigten und/oder ungesättigten Monocarbonsäure in Gegenwart inerter Lösungsmittel bei 60 bis 75°C vollständig umsetzt. Zur Einführung zusätzlicher Vernetzungsfunktionen bzw. zur Beeinflussung von Filmaufbau und Filmoberfläche werden die Epoxidgruppen anteilig mit gesättigten und/oder ungesättigten Carbonsäuren, primären und/oder sekundären Aminen oder Halbestern aus Dicarbonsäuren und tertiären Aminoalkoholen umgesetzt.

Es wurde nun gefunden, daß man durch den Einsatz von substituierten Oxazolidinhalbestern Produkte mit wesentlich verbesserten Eigenschaften, insbesondere bezüglich der Ausbildung einer einwandfreien Filmoberfläche der eingebrannten Filme, erhält.

Die vorliegende Erfindung betrifft demgemäß ein Verfahren zur Herstellung von nach vollständiger oder partieller Neutralisation mit anorganischen und/oder organischen Säuren wasserverdünnbaren Bindemitteln, durch Umsetzung von mindestens 50 Mol-% der Epoxidgruppen einer harzartigen Verbindung mit mindestens zwei 1,2-Epoxidgruppen pro Molekül und einem Epoxidäquivalent von mindestens 160, mit Halbestern aus aliphatischen, cycloaliphatischen oder aromatischen Dicarbonsäuren und Hydroxyalkyloxazolidinen, welches dadurch gekennzeichnet ist, daß man als Oxazolidinhalbester

(a) ein Umsetzungsprodukt aus einem primären Alkanolamin, einer Monoepoxidverbindung, einer Carbonylverbindung und einer anhydridbildenden Di- und/oder Tricarbonsäure mit der allgemeinen Formel

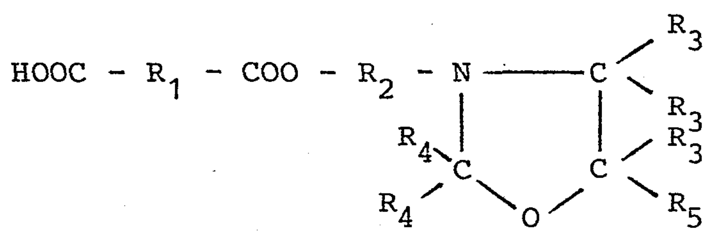

(I)

oder gegebenenfalls beim Einsatz von primären ß-Hydroxyaminen auch der Formel

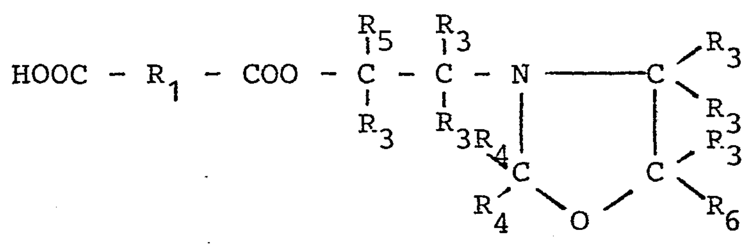

und/oder

(b) ein Umsetzungsprodukt aus einem 2-Aminopropandiol-1,3, einem (Meth)acrylsäureester, einer Carbonylverbindung und einer anhydridbildenden Di- oder Tricarbonsäure mit der allgemeinen Formel

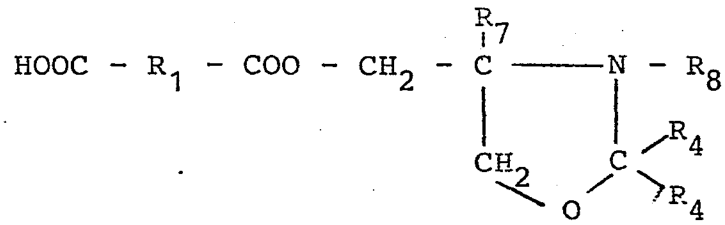

(II)

und/oder

(c) ein Umsetzungsprodukt aus einem primären ß-Hydroxymonoamin, einem Hydroxy(meth)acrylat, einer Carbonylverbindung und einer anhydridbildenden Di- oder Tricarbonsäure mit der allgemeinen Formel

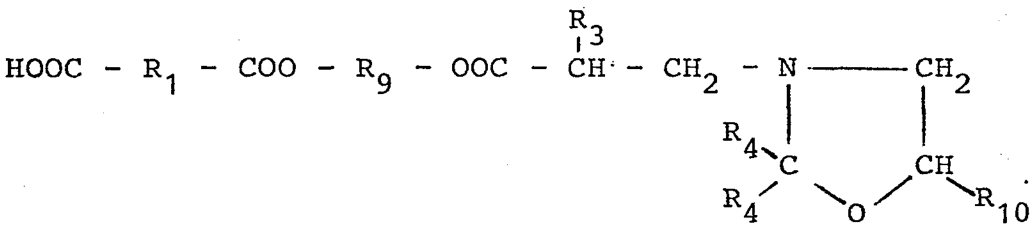

(III)

einsetzt, wobei

$R_1$ einen gesättigten oder ungesättigten, aliphatischen, cycloaliphatischen oder aromatischen, gegebenenfalls Carboxylgruppen tragenden Kohlenwasserstoffrest,

$R_2$ einen geradkettigen oder verzweigten oder cyclischen, gegebenenfalls substituierten Alkylenrest mit 1 bis 12 C-Atomen,

$R_3$ ein Wasserstoffatom oder einen Methylrest,

$R_4$ ein Wasserstoffatom oder einen geradkettigen oder verzweigten Alkylrest mit 1 bis 4 C-Atomen oder, für beide $R_4$ gemeinsam, einen ringbildenden, gegebenenfalls substituierten Alkylenrest und

$R_5$ einen gesättigten oder ungesättigten, gegebenenfalls Äther- oder Estergruppen enthaltenden aliphatischen, cycloaliphatischen oder aromatischen Kohlenwasserstoffrest,

$R_6$ = $R_3$ oder einen Alkylrest mit mehr als 1 C-Atom oder einen Phenylrest,

$R_7$ ein Wasserstoffatom oder einen geradkettigen oder verzweigten oder cyclischen, gegebenenfalls Hydroxylgruppen tragenden, Alkylrest mit 2 bis 12 C-Atomen,

$R_8$ einen nach der Reaktion mit dem am Stickstoff befindlichen aktiven Wasserstoffatom verbleibenden Rest eines in bezug auf die Doppelbindungen monofunktionalen Acryl- oder Methacrylmonomeren,

$R_9$ einen geradkettigen oder verzweigten Alkylen- oder Polyalkylenätherrest,

$R_{10}$ ein Wasserstoffatom, einen Alkyl- oder einen Phenylrest darstellt.

Die Erfindung betrifft weiters die aus diesen Bindemitteln hergestellten Überzugsmittel, sowie deren Verwendung als kathodisch abscheidbare Lacke.

Wie sich aus den angegebenen allgemeinen Formeln I bis III ergibt, werden unter dem Begriff "substituierte Oxazolidine" sowohl am Stickstoff als auch an den verschiedenen Kohlenstoffatomen substituierte Produkte verstanden.

Unter dem Begriff "Halbester" werden in der Beschreibung der vorliegenden Erfindung auch Partialester von solchen Tricarbonsäuren verstanden, deren Anhydridgruppe mit einem Hydroxyoxazolidin umgesetzt wurde . Diese Produkte weisen demgemäß zwei zur Reaktion mit Epoxidgruppen befähigte Carboxylgruppen auf.

Die Reaktionsfolge bei der Herstellung der erfindungsgemäß eingesetzten substituierten Oxazolidinhalbester kann wie folgt dargestellt werden:

(A) Produkte gemäß Formel (I) bzw. (Ia)

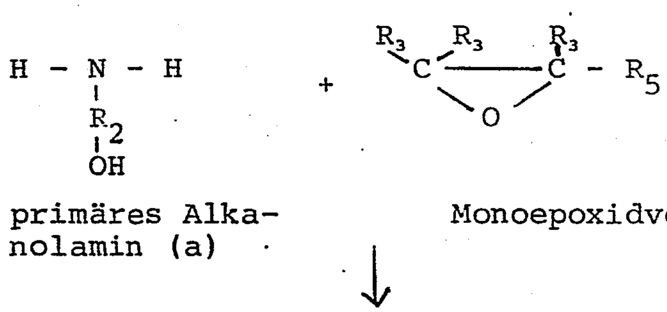

primäres Alkanolamin (a)

Monoepoxidverbindung (b)

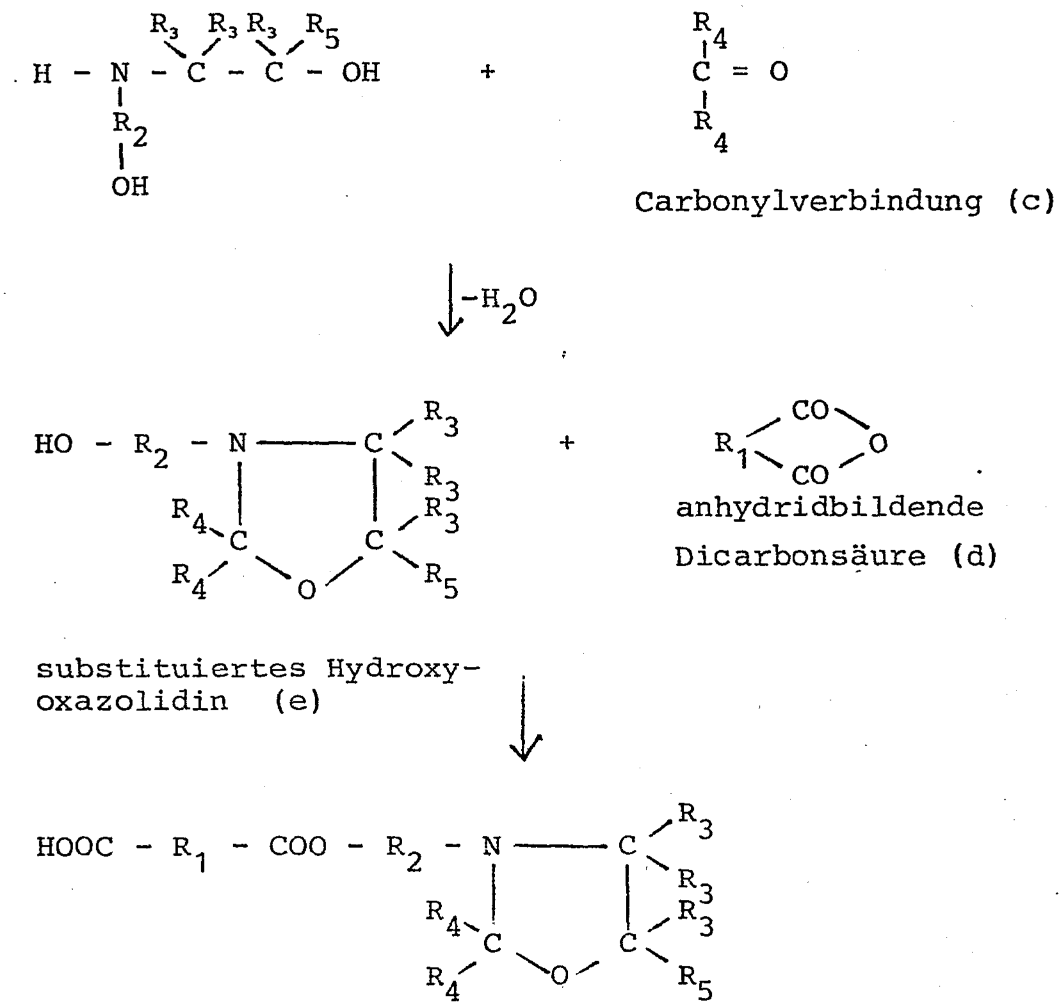


Carbonylverbindung (c)

anhydridbildende Dicarbonsäure (d)

substituiertes Hydroxy-oxazolidin (e)

Bei der Verwendung von primären ß-Hydroxyaminen kann die Oxazolidinringbildung auch in anderer Weise erfolgen, wobei ein Hydroxyalkyloxazolidin der Formel

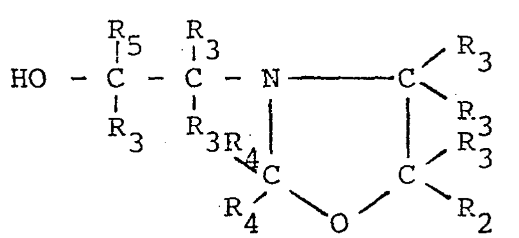

(e 1)

zur Umsetzung mit der Dicarbonsäure (d) gelangt (Produkte entsprechend Formel Ia).

Zur Herstellung der Oxazolidinhalbester gemäß den Formeln (I) und (Ia) wird 1 Mol eines primären Alkanolamins (a) mit 1 Mol einer Monoepoxidverbindung (b) umgesetzt, wobei die Reaktion vorteilhaft durch Zugabe der Monoepoxidverbindung (b) zum Amin (a) bei 60 bis 130°C erfolgt. Zur Vervollständigung der Reaktion wird eine Temperatur von 90 bis 130°C nach Ende der Zugabe weiter aufrechterhalten.

In der zweiten Stufe wird das Epoxidaminaddukt mit der Carbonylverbindung (c) bei 80 bis 110°C unter Ringschluß umgesetzt, wobei das entstehende Reaktionswasser azeotrop mit Hilfe eines Schleppmittels z. B. einem Benzinkohlenwasserstoff mit einem Siedebereich von 80 bis 120°C abgetrennt wird.

Die Umsetzung des Oxazolidins (e) bzw. (e1) mit dem Dicarbonsäureanhydrid, welches in der Formel (I) durch den Formelteil HOOC - $R_1$ - COO - dargestellt ist, erfolgt in stöchiometrischen Mengenverhältnissen, vorzugsweise in Gegenwart inerter Lösungsmittel, wie Estern, Äthern, Ketonen oder aromatischen Lösungsmitteln. Durch die basischen Gruppierungen wird die Reaktion beschleunigt und erfolgt sehr schnell auch bei niedrigen Temperaturen. Bei Temperaturen zwischen 40 und 80°C wird normalerweise nach 30 bis 120 Minuten der theoretische Säurewert des Halbesters erreicht. Temperaturen über 80°C sollen bei der Herstellung der Halbester vermieden werden, daß in diesem Falle bereits Vernetzungsreaktionen eintreten können, welche zu unbrauchbaren Zwischenprodukten führen.

Als primäre Alkanolamine (a) können Alkanolmonoamine verwendet werden, welche eine primäre Aminogruppe und eine primäre oder eine sekundäre Alkanolgruppe und 2 - 12 C-Atome aufweisen. Bevorzugt werden Alkanolalkylamine vom Typ der homologen Monoalkanolmonoamine, sowie deren Isomere verwendet. Dazu zählen beispielsweise das Monoäthanolamin, die

Monopropanolamine usw. Es können jedoch auch substituierte Alkanolamine, wie das 2-Phenyl-2-hydroxy-äthylamin zum Einsatz kommen.

Als Monoepoxidverbindungen (b) können Carbonsäureglycidylester, wie insbesonders Cardura® E (der Glycidylester von verzweigten $C_9$-$C_{11}$-Monocarbonsäuren) oder Glycidylmethacrylat, Glycidyläther wie Butyl-, Phenyl-, p-tert.Butylphenol- oder Allylglycidyläther oder Kohlenwasserstoffoxide wie Olefinoxide ($CH_3 - (CH_2)_n - CH - CH_2$ mit O-Brücke zwischen CH und $CH_2$), Octylenoxid ($CH_3-(CH_2)_4- CH - CH - CH_3$ mit O-Brücke zwischen den beiden CH), Styroloxid oder Cyclohexenvinylmonoxid verwendet werden. Durch die entsprechende Auswahl des an der Glycidgruppe befindlichen Restes können die Eigenschaften des Endproduktes bezüglich Verlauf, Elastizität, Härte, Vernetzungsdichte etc. wesentlich beeinflußt werden.

Als Carbonylverbindungen (c), welche zur Ausbildung des Oxazolidinringes dienen, werden aliphatische und aromatische Aldehyde, vorzugsweise Formaldehyd und Benzaldehyd oder Ketone, wie Methylisobutylketon oder Cyclohexanon eingesetzt.

Als Carbonsäureanhydride (d) können gesättigte oder ungesättigte aliphatische oder cycloaliphatische Dicarbonsäureanhydride, also die Anhydride der Bernsteinsäure und ihre Homologen, oder der verschiedenen Hydrierungsstufen aromatischer Dicarbonsäuren oder Maleinsäure eingesetzt werden. Ebenso können die Anhydride aromatischer Di- oder Tricarbonsäuren, z. B. o-Phtalsäureanhydrid, o-Naphtocarbonsäureanhydride oder Trimellithsäureanhydrid eingesetzt werden. Bevorzugt werden Dicarbonsäureanhydride und besonders bevorzugt das Tetrahydrophthalsäureanhydrid verwendet. Beim alleinigen oder gegebenenfalls anteiligen Einsatz von Tricarbonsäureanhydriden ist selbstverständlich die höhere

Funktionalität des resultierenden Partialesters bei der Auswahl der zur weiteren Umsetzung herangezogenen Epoxidharze zu berücksichtigen.

(B) Produkte gemäß Formel (II):

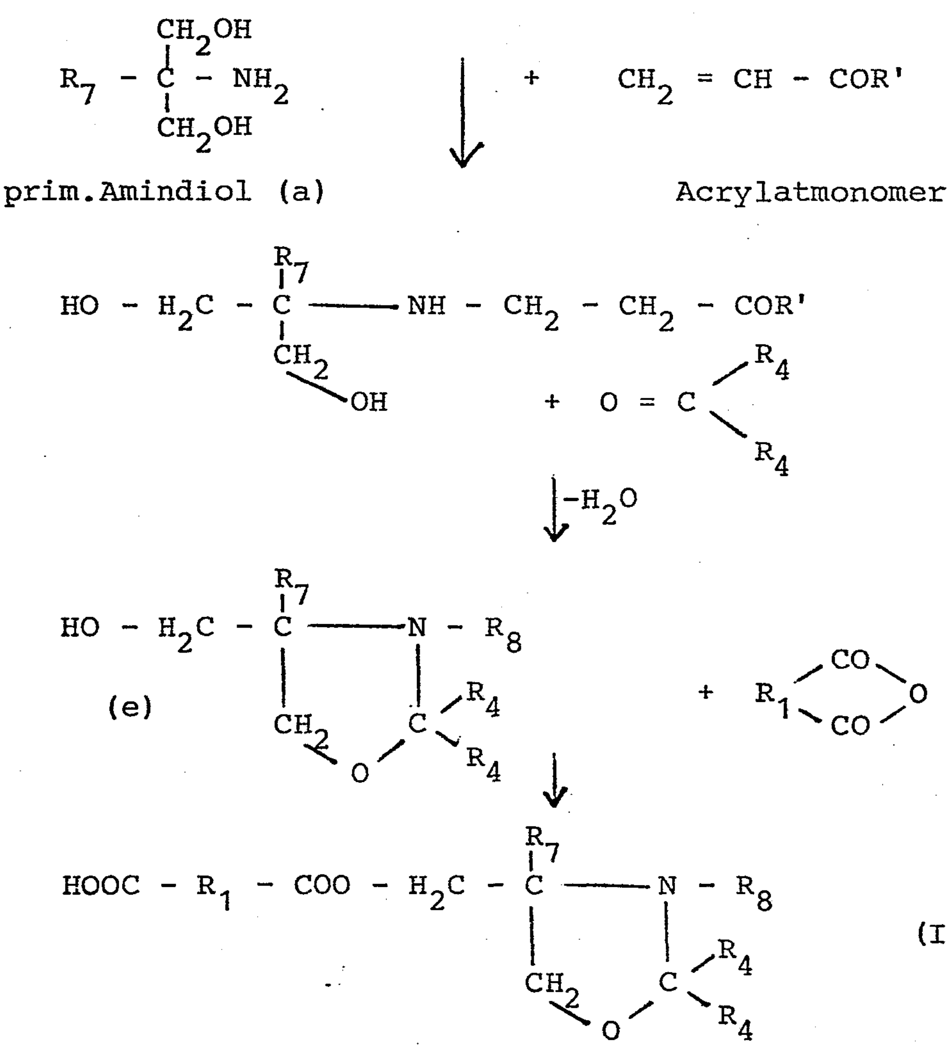


prim.Amindiol (a)

Acrylatmonomer (b)

(c)

(e)

(d)

(II)

Zur Herstellung der erfindungsgemäß eingesetzten Oxazolidinhalbester gemäß Formel (II) wird in erster Stufe das primäre Amindiol (a) bei 80 bis 100°C mit dem Acrylatmonomeren (b) etwa 2 Stunden umgesetzt. Bei Verwendung von Methacrylaten wird die Reaktion vorteilhafterweise bei etwa 140°C durchgeführt. Der Ringschluß mit der Carbonylverbindung (c) sowie die Umsetzung mit dem Di- oder Tricarbonsäureanhydrid erfolgt unter den in Abschnitt (A) angegebenen Bedingungen.

Als Aminoverbindungen können neben dem 2-Aminopropandiol-1,3 weiters das 2-Amino-2-methyl-propandiol-1,3 sowie dessen geradkettige oder verzweigte Homologe eingesetzt werden. Ein bifunktioneller Halbester wird beim Einsatz von Trimethylolaminomethan erhalten.

Als Acrylatmonomere (b) können neben den homologen Estern der Acrylsäure bzw. der Methacrylsäure mit Monoalkoholen auch tertiäre Aminogruppen tragende Monomere, beispielsweise Dimethylaminoäthylacrylat und dessen Homologe oder (Meth)acrylamid eingesetzt werden. Beim Einsatz der homologen Hydroxyacrylate können auch in diesem Fall bifunktionelle Halbester hergestellt werden.

Die eingesetzten Carbonylverbindungen (c) und Carbonsäureanhydride (d) entsprechen den in Abschnitt (A) angegebenen Verbindungen.

(C) <u>Produkte der Formel (III):</u>

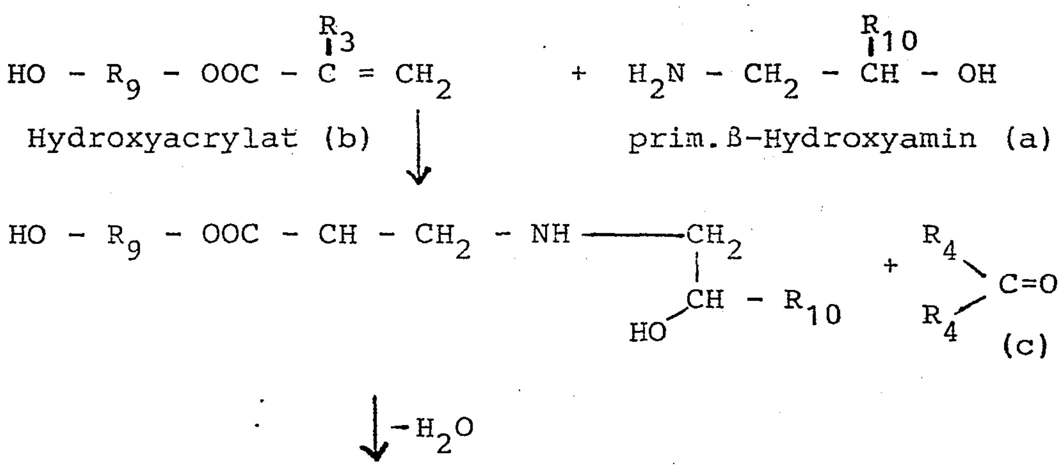

(d) 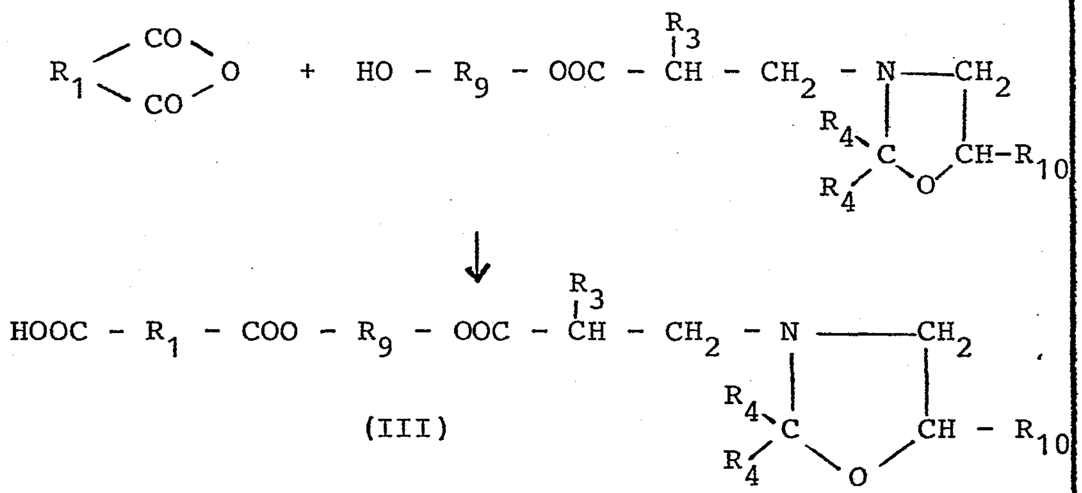

(III)

Zur Herstellung der erfindungsgemäß eingesetzten Oxazolidinhalbester gemäß Formel (III) wird in erster Stufe das primäre ß-Hydroxymonoamin (a), mit dem Hydroxyacrylat (b), bei 80 bis 100°C in äquimolaren Mengen etwa 2 Stunden umgesetzt. Bei Verwendung von Hydroxymethacrylaten wird die Reaktion vorteilhaft bei 140°C durchgeführt. Der Ringschluß mit der Carbonylkomponente (c) sowie die Umsetzung mit dem Di- oder Tricarbonsäureanhydrid erfolgt ebenfalls unter den im Abschnitt (A) angegebenen Bedingungen.

Als ß-Hydroxymonoamine (a) können Monoalkanolamine wie Monoäthanolamin oder Isopropanolamin oder substituierte Amine vom Typ des 2-Phenyl-2-hydroxy-äthylamines eingesetzt werden.

Als Hydroxy(meth)acrylate (b) kommen Hydroxyalkyl(meth)-acrylate, d. h. die Acryl- bzw. Methacrylmonoester von Diolen, wie Äthylenglykol und seine Homologe, aber auch Hydroxypolyalkylenätheracrylate, d. h. die Monoveresterungsprodukte der (Meth)acrylsäure mit Di-, Tri- und höheren Äthylen- oder Propylenglykolen zur Anwendung.

Die Carbonylverbindungen (c) und die Carbonsäureanhydride (d) entsprechen den im Abschnitt (A) angegebenen Verbindungen.

Die so erhaltenen Halbester werden bei 60 bis 75°C mit den 1,2-Epoxidgruppen tragenden Verbindungen bis zu einer Säurezahl von weniger als 3 mg KOH/g reagiert.

Geeignet als 1,2-Epoxidgruppen tragende Verbindungen sind die verschiedenen bekannten Epoxidharze auf Basis von Phenolen, insbesonders von Bisphenol A und Phenolnovolaken, sowie Epoxidharze auf Basis aliphatischer Alkohole und Glycidylgruppen tragende Copolymerisate mit einem Epoxidäquivalent von mind. 160. Zur Gewährleistung einer ausreichenden Funktionalität weisen die erfindungsgemäß eingesetzten Epoxidverbindungen mindestens 2 1,2-Epoxidgruppen pro Molekül auf. Verbindungen dieser Art sind in ausführlicher Weise im "Handbook of Epoxy Resins" von H. Lee und K. Neville, McGraw-Hill Book Com., New York, 1967 beschrieben.

Die bei der Einführung der Oxazolidingruppen tragenden Zwischenprodukte nicht zur Reaktion gelangenden Epoxidgruppen der Di- oder Polyepoxidharze werden mit anderen modifizierenden Verbindungen mit aktiven Wasserstoffatomen, wie Carbonsäuren oder Aminen reagiert. Die zur Verarbeitung als ETL-Bindemittel gelangenden Produkte sind praktisch frei von nichtreagierten Epoxidgruppen. Als Carbonsäuren können längerkettige Carbonsäuren, wie gesättigte oder ungesättigte Ölfettsäuren, aber auch $\alpha,\beta$-ungesättigte Monocarbonsäuren, wie (Meth)acrylsäure oder auch Halbester von Dicarbonsäuren mit gesättigten oder ungesättigten Alkoholen oder Hydroxyalkyloxazolidinen oder Partialester von Tricarbonsäuren eingesetzt werden. Ähnliche Modifikationen sind auch in der EP 00 28 402 beschrieben. Bei gleichzeitiger Erhöhung des Molekulargewichtes können in untergeordnetem Maße auch aliphatische Dicarbonsäuren herangezogen werden. Bei der Verwendung von primären oder sekundären Aminen muß jedoch die Einhaltung des für die Gesamtaminzahl gegebenen Rahmens sowie Beeinflussung der Viskosität berücksichtigt werden, da anderenfalls die Abscheidungsparameter zu weitgehend verändert werden.

Die Mengenverhältnisse zwischen den Komponenten werden so gewählt, daß für das Endprodukt eine theoretische Aminzahl von mindestens 35, vorzugsweise von 50 - 140 mg KOH/g resultiert.

Eine technologische Vereinfachung bei der Modifizierung der Epoxidverbindungen mit verschiedenen Oxazolidinhalbestern besteht in der gemeinsamen Herstellung dieser Zwischenprodukte. So können z. B. die Halbester gemäß EP 00 28 402 und die erfindungsgemäß eingesetzten Halbester in vielen Fällen in einem Arbeitsgang hergestellt werden.

In einer besonders günstigen Ausführungsform des Verfahrens werden die erfindungsgemäß hergestellten Bindemittel im Anschluß an die Umsetzung des Epoxidharzes mit den Oxazolidingruppen tragenden Zwischenprodukten bzw. den übrigen Modifikatoren einer sauren Hydrolyse bei 50 bis 80°C unterworfen, wobei die Oxazolidinringe wahrscheinlich zum Teil unter Bildung substituierter Methylolgruppen geöffnet werden.

Durch diese Nachbehandlung werden Reaktionen vorweggenommen, welche ansonsten erst im fertigen Lack bzw. im Tauchbad ablaufen. Zu diesem Zweck wird das Reaktionsprodukt mit Wasser und einem Teil der später zur Neutralisation eingesetzten Säure einige Stunden bei der angegebenen Temperatur behandelt.

Die Bindemittel können in bekannter Weise mit Pigmenten vermahlen werden und werden zur Herstellung eines verarbeitungsfertigen Materials nach partieller oder vollständiger Neutralisation mit anorganischen oder organischen

Säuren bei pH-Werten zwischen 4 und 7 mit vorzugsweise deionisiertem Wasser bei Verwendung für die Elektrotauchlackierung auf einen Festkörpergehalt zwischen 5 und 20 % verdünnt. Die erfindungsgemäß hergestellten Bindemittel zeigen auch bei niedrigen Neutralisationsgraden ausgezeichnete Wasserverdünnbarkeit. Die Verwendung von Zusatz- und Hilfsstoffen sowie die Bedingungen für die Beschichtung eines als Kathode geschalteten Substrats sind dem Fachmann bekannt und bedürfen keiner weiteren Erläuterung. Besonders eignen sich die erfindungsgemäß hergestellten Produkte als Anreibmedien für Pigmente und Füllstoffe. Auch hier sind die Verfahrensweisen dem Fachmann bekannt.

Die nachfolgenden Beispiele sollen die Erfindung erläutern, stellen jedoch keine Beschränkung ihres Umfanges dar. Alle Angaben in Teilen oder Prozenten beziehen sich, soferne nicht anders angegeben, auf Gewichtseinheiten. Alle Angaben in den Tabellen beziehen sich auf Feststoffe.

In den Beispielen werden folgende Abkürzungen verwendet:

| | |
|---|---|
| MOLA | Monoäthanolamin |
| MIPA | Monoisopropanolamin |
| MPA | Mono-n-propanolamin |
| DOLA | Diäthanolamin |
| DIPA | Diisopropanolamin |
| AEPD | 2-Amino-2-Äthyl-propandiol-1,3 |
| DEA | Diäthylamin |
| DEAPA | Diäthylaminopropylamin |
| DMAPA | Dimethylaminopropylamin |
| CE | Glycidylester von $C_9$-$C_{11}$ Monocarbonsäuren |
| AGE | Allylglycidyläther |
| GMA | Glycidylmethacrylat |
| BUAC | n-Butylacrylat |
| EHA | 2-Äthylhexylacrylat |

| | |
|---|---|
| EMA | Äthylmethacrylat |
| HEA | Hydroxyäthylacrylat |
| MIBK | Methylisobutylketon |
| CHX | Cyclohexanon |
| FA | Paraformaldehyd (91 %) |
| THPA | Tetrahydrophthalsäureanhydrid |
| MA | Maleinsäureanhydrid |
| PA | Phthalsäureanhydrid |
| TMA | Trimellithsäureanhydrid |
| EPH I | Epoxidharz auf Basis Bisphenol A Epoxidäquivalent ca. 200 |
| EPH II | Epoxidharz auf Basis Bisphenol A Epoxidäquivalent ca. 500 |
| EPH III | Epoxidharz auf Basis eines Phenolnovolakes, Epoxidäquivalent ca. 190 |
| MACS | Methacrylsäure |
| TÖFS | Tallölfettsäure |
| RFS | dehydratisierte Rizinusölfettsäure (DCO Fettsäure) |
| MS | Milchsäure |
| EGL | Äthylenglykolmonoäthyläther |
| AZ | Aminzahl mg KOH/g |
| OHZ | Hydroxylzahl mg KOH/g |
| DBZ | Anzahl der endständigen $\alpha,\beta$-ungesättigten Doppelbindungen pro 1000 g Festharz |
| NEUTR | Neutralisation in mMol Ameisensäure pro 100 g Festharz |
| pH | pH-Wert einer 10%igen Lösung bei der angegebenen Neutralisation |
| Vmax | Aufbruchsspannung (Volt) |

(A) Herstellung der Oxazolidinhalbester gemäß Formel (I) und (I a)

Zusammensetzungen und Reaktionsbedingungen für die Herstellung der Hydroxyalkyloxazolidine sind in TAB 1 zusammengefaßt. Zur Herstellung werden die Monoepoxidverbindung und das Monoalkanolamin in einem geeigneten Reaktionsgefäß unter Beachtung einer eventuell auftretenden Exothermie auf 90 bis 130°C erhitzt und bei dieser Temperatur 2 bis 3 Stunden gehalten. Anschließend wird bei 70 bis 80°C die Carbonylverbindung (sowie gegebenenfalls eingesetztes Dialkanolamin) und geeignetes Azeotropkreislaufmittel (vorzugsweise Spezialbenzin mit einem Siedebereich zwischen 80 und 120°C oder ein ähnlicher aliphatischer Kohlenwasserstoff) zugegeben. Die sich einstellende Kreislauftemperatur wird solange gehalten, bis die berechnete Reaktionswassermenge abgeschieden ist. Das Kreislaufmittel wird dann durch Anlegen von Vakuum abgezogen.

Die Oxazolidin-Dicarbonsäurehalbester werden entsprechend den in Tabelle 2 gemachten Angaben hergestellt. Die Umsetzung erfolgt bis zum theoretischen Säurewert für den Halbester. Die Umsetzung kann gegebenenfalls in geeigneten Lösungsmitteln, wie Xylol oder Diäthylenglykoldimethyläther erfolgen. Der Festkörpergehalt der Zwischenprodukte liegt vorteilhafterweise zwischen 80 und 100 %.

TAB 1

| OXAZOLIDIN | MONOALKANOL-AMIN | MONOEPOXID | BEDINGUNGEN Stden/°C | DIALKANOL-AMIN | CARBONYL-VERBINDG. |
|---|---|---|---|---|---|
| O 1 A | 61 MOLA | 228 AGE | 3/110 | - | 100 MIBK |
| O 2 A | 61 MOLA | 240 CE | 3/130 | - | 33 FA |
| O 3 A | 38 MIPA | 60 CE<br>36 GMA | 3/100 | 53 DOLA | 33 FA |
| O 4 A | 75 MPA | 240 CE | 3/130 | - | 98 CHX |
| O 5 A | 38 MPA | 114 AGE | 3/110 | 67 DIPA | 33 FA |

TAB 2

| | CARBONSÄUREANHYDRID | OXAZOLIDIN Formel (I) oder (I a) | REAKTIONS-TEMP. °C |
|---|---|---|---|
| HE 1 A | 152 THPA | 199/ 03 A | 70 |
| HE 2 A | 98 MA | 395/ 04 A | 55 |
| HE 3 A | 152 THPA | 313/ 02 A | 75 |
| HE 4 A | 106 THPA<br>58 TMA | 371/ 01 A | 70 |
| HE 5 A | 98 MA | 231/ 05 A | 60 |

Beispiele 1 - 8: Herstellung der Endprodukte unter Verwendung von Oxazolidinhalbestern der Formel (I) und (I a)

Die in TAB 3 angegebenen Ausgangsmaterialien werden gegebenenfalls in EGL gelöst, sodaß eine Lösung mit 62 - 72 Gew.-% Festköpergehalt resultiert. Der Ansatz wird auf 75°C erwärmt und solange bei dieser Temperatur gehalten, bis die Säurezahl unter 3 mg KOH/g gesunken ist. Anschließend werden die Produkte nach Zusatz von 10 mMol Essigsäure pro 100 g Festharz und Verdünnung mit Wasser auf einen Festkörpergehalt von 60 Gew.-% etwa 3 Stunden bei 60 bis 70°C unter Rühren gehalten. Bei Bedarf können die Bindemittel mit Lösungsmitteln, wie Diacetonalkohol oder Glykoläthern vor der Verarbeitung weiterverdünnt werden.

TAB 3 (alle Mengenangaben in g Festharz)

| | EPOXIDHARZ | HE bzw.MONOCARBON-SÄURE | AMINE | MOLVERHÄLTNIS EPH +) / HE / AM |
|---|---|---|---|---|
| 1 | 200 EPH I<br>500 EPH II | 351 HE 1 A | 73 DEA | 2 : 1 : 1 |
| 2 | 550 EPH II<br>285 EPH III | 789 HE 2 A<br>43 MACS | 33 DEAPA | 2,6 : 1,6 / 0,5 : 0,25 |
| 3 | 100 EPH I<br>300 EPH II<br>304 EPH III | 651 HE 3 A | 53 DOLA<br>52 DEAPA | 2,7 :1,4 : 0,5 / 0,4 |

Fortsetzung TAB 3

| | EPOXIDHARZ | HE bzw. MONOCARBON-SÄURE | AMINE | MOLVERHÄLTNIS EPH+) / HE / AM |
|---|---|---|---|---|
| 4 | 456 EPH III | 535 HE 4 A<br>112 TÖFS | 36 DMAPA | 2,4 : 1,0<br>0,4 :0,35 |
| 5 | 200 EPH I<br>266 EPH III | 329 HE 5 A<br>69 MACS | 44 DEA | 2,4 : 1,0<br>0,8 :0,6 |
| 6 | 500 EPH II<br>342 EPH III | 837 HE 3 A | 29 DEA<br>31 DMAPA | 2,8 : 1,8 : 0,4<br>0,3 |
| 7 | 180 EPH I<br>600 EPH II | 351 HE 1 A | 37 DEA<br>63 DOLA | 2,1 : 1 : 0,5<br>0,6 |
| 8 | 200 EPH I<br>250 EPH II<br>190 EPH III | 493 HE 2 A | 53 DOLA<br>65 DEAPA | 2,5 : 1 : 0,5<br>0,5 |

+) VAL Epoxidgruppen

In der TAB 4 sind die Kennzahlen der Produkte gemäß den Beispielen 1 - 8 zusammengefaßt.

TAB 4

| BEISPIEL | AZ | DBZ | NEUTR. | pH | Vmax |
|---|---|---|---|---|---|
| 1 | 100 | - | 50 | 5,1 | 200 |
| 2 | 69 | 0,29 | 40 | 5,6 | 170 |
| 3 | 103 | 0,23 | 35 | 5,9 | 280 |
| 4 | 84 | - | 40 | 5,7 | 220 |
| 5 | 99 | 0,89 | 45 | 5,0 | 270 |
| 6 | 90 | 0,20 | 25 | 6,4 | 290 |
| 7 | 96 | - | 60 | 4,7 | 210 |
| 8 | 112 | - | 45 | 5,2 | 260 |

(B) Herstellung der Oxazolidinhalbester gemäß Formel (II)

In erster Stufe werden die Aminopropandiole mit dem Acrylat 2 Stunden bei 80 bis 100°C reagiert. Bei Verwendung von Methacrylaten wird vorteilhafterweise die Reaktionstemperatur auf etwa 140°C erhöht. Anschließend wird bei 70 bis 80°C die Carbonylverbindung (sowie gegebenenfalls eingesetztes Dialkanolamin) und ein geeignetes Azeotropkreislaufmittel (vorzugsweise Spezialbenzin mit einem Siedebereich zwischen 80 und 120°C oder ein ähnlicher aliphatischer Kohlenwasserstoff) zugegeben. Die sich einstellende Kreislauftemperatur wird solange gehalten, bis die berechnete Reaktionswassermenge abgeschieden ist. Das Kreislaufmittel wird dann durch Anlegen von Vakuum abgezogen. Zusammensetzung und Reaktionsbedingungen sind in TAB 5 zusammengefaßt.

Die Oxazolidin-Dicarbonsäurehalbester werden entsprechend den in Tabelle 6 gemachten Angaben hergestellt. Die Umsetzung derfolgt bis zum theoretischen Säurewert für den Halbester. Die Umsetzung kann gegebenenfalls in geeigneten Lösungsmitteln, wie Xylol oder Diäthylenglykoldimethyläther erfolgen. Der Festkörpergehalt der Zwischenprodukte liegt vorteilhafterweise zwischen 80 und 100 %.

Beispiele 9 - 12: Herstellung der Endprodukte unter Verwendung von Oxazolidinhalbestern der Formel (II)

Die in TAB 7 angegebenen Ausgangsmaterialien werden gegebenenfalls in EGL gelöst, sodaß eine Lösung mit 62 - 72 Gew.-% Festkörpergehalt resultiert. Der Ansatz wird auf 75°C erwärmt und solange bei dieser Temperatur gehalten, bis die Säurezahl unter 3 mg KOH/g gesunken ist. Anschließend werden die Produkte nach Zusatz von 10 mMol Essigsäure pro 100 g Festharz und Verdünnung mit Wasser auf einen Festkörpergehalt von 60 Gew.-% etwa 3 Stunden bei 60 bis

70°C unter Rühren gehalten. Bei Bedarf können die Bindemittel mit Lösungsmitteln, wie Diacetonalkohol oder Glykoläthern, vor der Verarbeitung weiterverdünnt werden.

TAB 5

| | AMIN | ACRYLAT | REAKTIONS-BED. 1. Stufe h / °C | ZUSÄTZL. MODIFIKATION | CARBONYL-VERBIND. |
|---|---|---|---|---|---|
| 01 B | 119 AEPD | 128 BUAC | 2 / 100 | -- | 100 MIBK |
| 02 B | 60 AEPD | 92 EHA | 2 / 110 | 53 DOLA | 33 FA |
| 03 B | 60 AEPD | 57 EMA | 2 / 140 | 67 DIPA | 33 FA |

TAB 6

| | CARBONSRE-ANHYDRID | OXAZOLIDIN | REAKTIONSTEMPERATUR °C |
|---|---|---|---|
| HE 1 B | 148 PA | 329 / 01 B | 75 |
| HE 2 B | 98 MA | 217 / 02 B | 60 |
| HE 3 B | 152 THPA | 196 / 03 B | 65 |

TAB 7

| | EPOXIDHARZ | HE bzw. MONO-CARBONSÄURE | AMINE | MOLVERHÄLTNIS EPH+) / HE / AMINE |
|---|---|---|---|---|
| 9 | 500 EPH II<br>285 EPH III | 441 HE 2 B | 53 DOLA<br>31 DMAPA | 2,5 : 1,4 : 0,5 / 0,3 |
| 10 | 280 EPH I<br>700 EPH II | 763 HE 1 B | 29 DEA<br>24 MOLA | 2,8 : 1,6 : 0,4 / 0,4 |
| 11 | 1100 EPH II | 557 HE 3 B | 44 DEA | 2,2 : 1,6 : 0,6 |
| 12 | 650 EPH II<br>247 EPH III | 378 HE 2 B<br>140 RFS | 32 DOLA<br>30 DEAPA | 2,6 : 1,2 / 0,5 : 0,3 / 0,3 |

+) VAL Epoxidgruppen

In der TAB 8 sind die Kennzahlen der Produkte gemäß den Beispielen 9 - 12 zusammengefaßt.

TAB 8

| BEISPIEL | AZ | OHZ | NEUTR. | pH | Vmax. |
|---|---|---|---|---|---|
| 9 | 107 | 4,8 | 40 | 5,8 | 240 |
| 10 | 75 | 3,6 | 60 | 4,9 | 210 |
| 11 | 72 | 3,2 | 55 | 5,0 | 170 |
| 12 | 79 | 3,8 | 50 | 4,8 | 200 |

(C) Herstellung der Oxazolidinhalbester gemäß Formel (III).

In erster Stufe wird das primäre ß-Hydroxymonoamin bei 80 bis 100°C mit äquimolaren Mengen des Hydroxyacrylats und gegebenenfalls gemeinsam mit Monoepoxidverbindungen etwa 2 Stunden reagiert. Beim Einsatz von Hydroxymethacrylaten wird vorteilhaft bei ca. 140°C gearbeitet. Anschließend wird bei 70 bis 80°C die Carbonylverbindung (sowie gegebenenfalls eingesetztes Dialkanolamin) und ein geeignetes Azeotropkreislaufmittel (vorzugsweise Spezialbenzin mit einem Siedebereich zwischen 80 und 120°C oder ein ähnlicher aliphatischer Kohlenwasserstoff) zugegeben. Die sich einstellende Kreislauftemperatur wird solange gehalten, bis die berechnete Reaktionswassermenge abgeschieden ist. Das Kreislaufmittel wird dann durch Anlegen von Vakuum abgezogen. Zusammensetzungen und Reaktionsbedingungen sind in TAB 9 zusammengefaßt.

Die Oxazolidin-Dicarbonsäurehalbester werden entsprechend den in Tabelle 10 gemachten Angaben hergestellt. Die Umsetzung erfolgt bis zum theoretischen Säurewert für den Halbester. Die Umsetzung kann gegebenenfalls in geeigneten Lösungsmitteln, wie Xylol oder Diäthylenglykoldimethyläther erfolgen. Der Festkörpergehalt der Zwischenprodukte liegt vorteilhafterweise zwischen 80 und 100%.

TAB 9

| | AMIN | (HYDROXY) ACRYLAT | EPOXIDVERBINDUNG | sek. HYDROXYAMIN | REAKTIONSBED. 1.Stufe h/ °C | CARBONYLVERBINDUNG |
|---|---|---|---|---|---|---|
| 01 C | 31 MOLA | 58 HEA | -- | 67 DIPA | 2 / 80 | 98 CHX |
| 02 C | 75 MIPA | 58 HEA | 120 CE | -- | 2 / 100 | 33 FA |
| 03 C+) | 122 MOLA | 71 GMA | 71 GMA | — | 2 / 100 - 140 | 200 MIBK |
| 04 C | 37 MOLA | 35 HEA | 72 CE | 42 DOLA | 2 / 90 | 98 CHX |

+) gemeinsame Umsetzung zu einem "Hydroxydi-oxazolidin".

TAB 10

| | CARBONSÄURE-ANHYDRID | OXAZOLIDIN | REAKTIONSTEMPERATUR °C |
|---|---|---|---|
| HE 1 C | 152 THPA | 236 / 01 C | 70 |
| HE 2 C | 91 THPA<br>77 TMA | 265 / 02 C | 70 |
| HE 3 C | 98 MA | 428 / 03 C | 55 |
| HE 4 C | 148 PA | 266 / 04 C | 75 |

Beispiele 13 - 18: Herstellung der Endprodukte

Die in TAB 11 angegebenen Ausgangsmaterialien werden gegebenenfalls in EGL gelöst, sodaß eine Lösung mit 62 - 72 Gew.-% Festkörpergehalt resultiert. Der Ansatz wird auf 75°C erwärmt und solange bei dieser Temperatur gehalten, bis die Säurezahl unter 3 mg KOH/g gesunken ist. Anschließend werden die Produkte nach Zusatz von 10 mMol Essigsäure pro 100 g Festharz und Verdünnung mit Wasser auf einen Festkörpergehalt von 60 Gew.-% etwa 3 Stunden bei 60 bis 70°C unter Rühren gehalten. Bei Bedarf können die Bindemittel mit Lösungsmitteln, wie Diacetonalkohol oder Glykoläthern vor der Verarbeitung weiterverdünnt werden.

TAB 11 (alle Mengenangaben in g Festharz)

| | EPOXIDHARZ | HE bzw. MONO-CARBONSÄURE | AMINE | MOLVERHÄLTNIS EPH+) / HE / AMINE |
|---|---|---|---|---|
| 13 | 560 EPH I | 947 HE 3 C | 73 DEA | 2,8 : 1,8 : 1,0 |
| 14 | 200 EPH I<br>250 EPH II<br>228 EPH III | 388 HE 1 C<br><br>196 RFS | 52 DIPA<br><br>39 DEAPA | 2,7 : 1,7 : 0,7 |
| 15 | 494 EPH III | 433 HE 2 C | 104 DEAPA | 2,6 : 1,0 : 0,8 |
| 16 | 360 EPH I<br><br>152 EPH III | 331 HE 4 C<br><br>45 MS | 51 DEA<br><br>31 DMAPA | 2,6 : 1,3 : 1,0 |
| 17 | 160 EPH I<br>400 EPH II<br>152 EPH III | 931 HE 1 C | -- | 2,4 : 2,4 : 0 |
| 18 | 280 EPH I<br><br>228 EPH III | 557 HE 2 C | 58 DEA | 2,6 : 1,28: 0,8 |

+) VAL Epoxidgruppen

In der TAB 12 sind die Kennzahlen der Produkte gemäß den Beispielen 13 - 18 zusammengefaßt.

TAB 12

| BEISPIEL | AZ | OHZ | NEUTR. | pH | Vmax |
|---|---|---|---|---|---|
| 13 | 163 | 6,3 | 30 | 6,5 | 290 |
| 14 | 83 | 4,1 | 55 | 5,1 | 180 |
| 15 | 141 | 4,5 | 25 | 6,0 | 270 |
| 16 | 121 | 4,8 | 35 | 5,4 | 220 |
| 17 | 82 | 4,4 | 60 | 5,2 | 230 |
| 18 | 104 | 4,6 | 45 | 5,9 | 250 |

Prüfung der Produkte gemäß Beispiel 1 - 18 als ETL-Lacke

Die Prüfung der Bindemittel gemäß Beispiel 1 - 18 erfolgt bei der Bestimmung der Wasserbeständigkeit durch Beschichtung eines entfetteten, nicht vorbehandelten Stahlblechs mit dem entsprechenden Klarlack. Für den Salzsprühtest werden die entfetteten, nicht vorbehandelten Stahlbleche mit einem pigmentierten Lack (100 Teile Festharz, 16 Teile Al-Silikatpigment, 2 Teile Ruß, 2 Teile Bleisilikat) unter den optimalen Spannungsbedingungen, welche eine Trockenfilmstärke von 16 bis 20 µm ergeben, beschichtet und 30 Minuten bei 160°C eingebrannt. Bei der Prüfung der Wasserfestigkeit (Wasserlagerung bei 40°C) zeigen die Beschichtungen nach 380 Stunden Testzeit keine optisch sichtbaren Veränderungen durch Rostangriff oder Bläschenbildung. Beim Salzsprühtest gemäß ASTM-B 117-64 zeigen alle Beschichtungen nach einer Testzeit von 340 Stunden einen Kreuzschnittangriff von weniger als 2 mm (Abreißmethode).

Patentansprüche:

1. Verfahren zur Herstellung von nach vollständiger oder partieller Neutralisation mit anorganischen und/oder organischen Säuren wasserverdünnbaren Bindemitteln, durch Umsetzung von mindestens 50 Mol-% der Epoxidgruppen einer harzartigen Verbindung mit mindestens zwei 1,2-Epoxidgruppen pro Molekül und einem Epoxidäquivalent von mindestens 160 mit Halbestern aus aliphatischen, cycloaliphatischen oder aromatischen Dicarbonsäuren und Hydroxyalkyloxazolidinen, dadurch gekennzeichnet, daß man als Oxazolidinhalbester

(a) ein Umsetzungsprodukt aus einem primären Alkanolamin einer Monoepoxidverbindung, einer Carbonylverbindung und einer anhydridbildenden Di- und/oder Tricarbonsäure mit der allgemeinen Formel

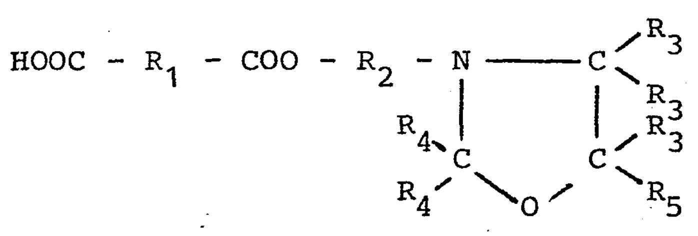

(I)

oder gegebenenfalls beim Einsatz von primären ß-Hydroxyaminen auch der Formel

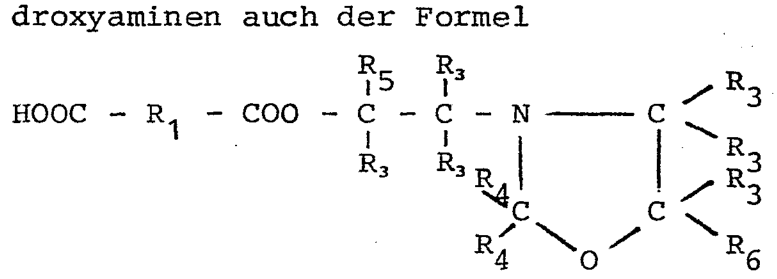

(Ia)

und/oder

(b) ein Umsetzungsprodukt aus einem 2-Aminopropandiol-1,3, einem (Meth)acrylsäureester, einer Carbonylverbindung und einer anhydridbildenden Di- oder Tricarbonsäure mit der allgemeinen Formel

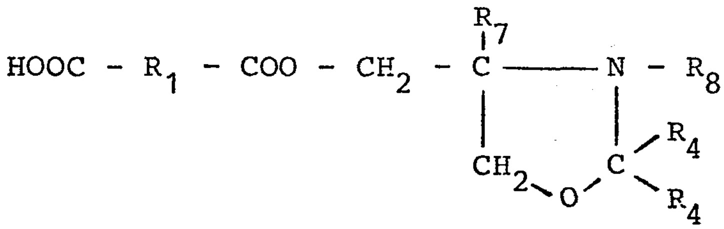

(II)

und/oder

(c) ein Umsetzungsprodukt aus einem primären ß-Hydroxymonoamin, einem Hydroxy(meth)acrylat, einer Carbonylverbindung und einer anhydridbildenden Di- oder Tricarbonsäure mit der allgemeinen Formel

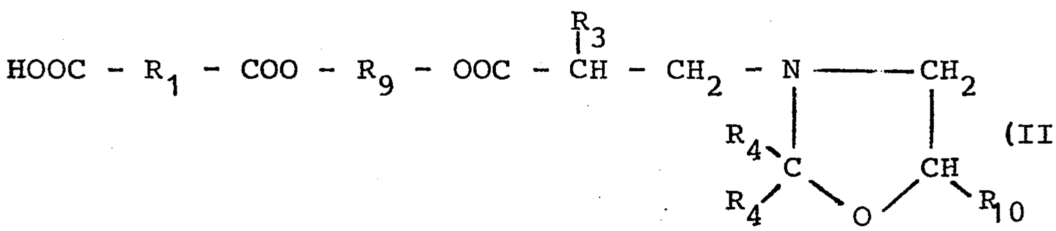

(III)

einsetzt, wobei

$R_1$ einen gesättigten oder ungesättigten, aliphatischen, cycloaliphatischen oder aromatischen, gegebenenfalls Carboxylgruppen tragenden Kohlenwasserstoffrest,

$R_2$ einen geradkettigen oder verzweigten oder cyclischen, gegebenenfalls substituierten Alkylenrest mit 1 bis 12 C-Atomen,

$R_3$ ein Wasserstoffatom oder einen Methylrest,

$R_4$ ein Wasserstoffatom oder einen geradkettigen oder verzweigten Alkylrest mit 1 bis 4 C-Atomen oder für beide $R_4$ gemeinsam einen ringbildenden, gegebenenfalls substituierten Alkylenrest und

$R_5$ einen gesättigten oder ungesättigten, gegebenenfalls Äther- oder Estergruppen enthaltenden aliphatischen, cycloaliphatischen oder aromatischen Kohlenwasserstoffrest,

$R_6$ = $R_3$ oder einen Alkylrest mit mehr als 1 C-Atom oder einen Phenylrest,

$R_7$ ein Wasserstoffatom oder einen geradkettigen oder verzweigten oder cyclischen, gegebenenfalls Hydroxylgruppen tragenden Alkylrest mit 2 bis 12 C-Atomen,

$R_8$ einen nach der Reaktion mit dem am Stickstoff befindlichen aktiven Wasserstoffatom verbleibenden Rest eines in bezug auf die Doppelbindungen monofunktionalen Acryl- oder Methacrylmonomeren,

$R_9$ einen geradkettigen oder verzweigten Alkylen- oder Polyalkylenätherrest,

$R_{10}$ ein Wasserstoffatom, einen Alkyl- oder einen Phenylrest darstellt.

2. Verfahren nach Anspruch 1, dadurch gekennzeichnet, daß man die Bindemittel im Anschluß an die Umsetzung des Epoxidharzes mit dem Oxazolidinhalbester und den gegebenenfalls eingesetzten Modifikatoren bei 50 bis 80°C einer sauren Hydrolyse unterwirft.

3. Verwendung der nach Anspruch 1 und 2 erhaltenen Bindemittel in kathodisch abscheidbaren Überzugsmitteln.

4. Überzugsmittel enthaltend die gemäß Ansprüchen 1 und 2 hergestellten Bindemittel in Kombination mit Pigmenten, Füllstoffen, Hilfslösungsmitteln und den üblichen Lackhilfsmitteln.